# EUROPEAN PATENT SPECIFICATION

(11) **EP 1 738 652 B1**
(45) Date of publication and mention of the grant of the patent: **13.05.2009**
(21) Application number: 06253337.7
(22) Date of filing: 27.06.2006
(51) Int. Cl.: A23G 9/04, B67D 1/08

(54) **Frozen beverages**
Gefrorene Getränke
Boissons glacées

(30) Priority: 27.06.2005 GB 0512966
(43) Date of publication of application: 03.01.2007
(73) Proprietor: IMI CORNELIUS (UK) LIMITED, Alcester Warwickshire B49 6EU (GB)
(72) Inventor: Moulder, Steven, Redditch, Worcestershire B67 5HB (GB)
(74) Representative: Wightman, David Alexander

(56) References cited:
- WO-A-02/39824
- WO-A-20/04088220
- US-A- 3 823 571
- US-A1- 2002 033 021
- US-B1- 6 705 106
- US-B1- 6 745 592

## Description

This invention concerns improvements in or relating to frozen beverages and in particular to an apparatus according to the preamble of claim 1 and method according to the preamble of claim 7 for producing and/or dispensing frozen beverages. Such apparatus and method is known from US 2002/033021A1and WO 02/3982AA. As used herein, the term "frozen" is used to describe beverages that are partially frozen that is, not forming a solid mass. Frozen beverages of this type are commonly referred to as "semi-frozen" or "slush" beverages that are capable of flowing and can be dispensed via a tap.

The invention has application to dispense of both alcoholic and non-alcoholic frozen beverages. The invention may be used to dispense both carbonated and non-carbonated (still) beverages and is especially suitable for dispense of frozen cider although it is not intended to be limited to such application.

Apparatus for producing frozen beverages is well known and typically includes a freeze cylinder comprising a beverage chamber in which liquid beverage is converted to frozen beverage by simultaneously cooling and stirring the beverage to achieve a desired viscosity (consistency). In the known apparatus, stirring is carried out mechanically by rotating an agitator driven by an electric motor.

Cooling and thus viscosity (consistency) of the frozen beverage is controlled in response to the resistance encountered by the agitator. More especially, as the beverage freezes, the viscosity of the frozen beverage increases and this in turn increases the torque that must be applied to rotate the agitator. This increase in torque can be used to control the cooling and thus the viscosity of the frozen beverage.

In one known arrangement, the motor is pivotally mounted and increased resistance to rotation of the agitator as the beverage freezes causes the motor to pivot against the biasing of a spring. The spring biasing is chosen so that the motor can pivot sufficiently to operate a switch to stop the cooling system when the frozen beverage has the required viscosity.

In another known arrangement, the motor is provided with means to detect increased resistance to rotation of the agitator as the beverage freezes and stop the cooling system when the frozen beverage has the required viscosity. Such means may be a motor current sensor and feedback loop.

In the known arrangements, the torque transmitted through the agitator is relied on to monitor viscosity (consistency) of the frozen beverage and control beverage cooling. The motor and controls are expensive and limited in range. In addition, there are problems associated with the accuracy and reliability of such arrangements.

For example, there is no set relationship between viscosity and torque and the nature of the frozen beverage can vary dramatically at any given torque value. As a result, the beverage can be subjected to cooling in excess of that required to achieve the desired viscosity. This in turn adds to costs and has an adverse effect on the quality of the frozen beverage.

In particular, the viscosity (consistency) of beverages containing water is related to the ice structure that is formed as the beverage freezes. Excessive cooling can lead to the ice crystal structure continuing to grow, becoming larger and sharper and reducing the ability of the frozen beverage to flow. This is referred to as the "Ostwald" ripening effect.

Operation of the cooling system to provide cooling over and above that required can also result in lumps of frozen beverage forming on the agitator reducing the resistance to rotation.

The present invention has been made from a consideration of the foregoing problems and disadvantages of the known systems for dispensing frozen beverages.

Thus, it is an object of the present invention to provide an improved apparatus and method for producing and/or dispensing frozen beverages.

According to a first aspect of the present invention, there is provided apparatus for producing a frozen beverage as defined in claim 1.

The phase change that occurs when a beverage containing water freezes is accompanied by changes in physical parameters of the beverage such as pressure and temperature.

More especially, liquid (unfrozen) beverages that contain water expand (increase in volume) as they freeze. This expansion leads to an increase in the pressure of the beverage in the beverage chamber that is related to the change from the liquid to the frozen state. This increase in pressure also causes a temperature change to occur that is related to the change from the liquid to the frozen state. This relationship between the pressure and temperature and the change of state of the beverage can be used to control the cooling means to achieve and maintain a frozen beverage having a desired viscosity (consistency).

In particular, the rapid pressure and temperature changes that occur as the beverage changes between liquid (unfrozen) and frozen states can be used to provide close control of the cooling means to achieve and maintain the desired viscosity (consistency) in a simple, cost effective manner that reduces or eliminates the afore-mentioned problems of the known control systems.

In one arrangement not according to the invention, the control means is operable to activate the cooling means in response to a pre-determined lower pressure in the beverage chamber and to de-activate the cooling means in response to a pre-determined upper pressure in the beverage chamber. Operating the cooling means between upper and lower pressure limits controls the cooling in an accurate, reliable manner that keeps cooling to that required to achieve and maintain the desired viscosity (consistency) of the frozen beverage. As a result, operating costs may be reduced and/or product quality improved. In particular, the "Ostwald" ripening effect may be controlled to prevent the ice crystal structure growing to form large, sharp crystals that inhibit flow of the frozen beverage.

Preferably, the control means can over-ride the upper pressure limit and operate the cooling means at pressures above the upper pressure limit under certain conditions. For example, over-shooting the upper pressure limit may be desirable on start-up of the apparatus and/or following a de-frost cycle when the beverage chamber is filled with liquid beverage. In this condition, the increase in pressure due to expansion caused as the beverage freezes may exceed the upper pressure limit before the beverage reaches a uniform frozen state having the desired viscosity. Once the uniform frozen state has been achieved, the control means reverts back to operate the cooling means at pressures between the upper and lower limits.

Any suitable pressure sensor such as a pressure transducer may be employed to monitor the pressure in the beverage chamber and provide a signal representative of the pressure to the control means for controlling operation of the cooling means. A single pressure sensor may be used to monitor the pressure in the beverage chamber. Alternatively a plurality of pressure sensors may be used to monitor the pressure at different positions and provide a signal representative of the average pressure sensed by all the pressure sensors. The or each pressure sensor may monitor the pressure in the beverage chamber directly or indirectly.

Preferably, the beverage chamber is provided with a pressure relief valve operable to open an outlet in response to the pressure in the beverage chamber exceeding a pre-determined pressure higher than the upper pressure limit controlling the cooling means. The pressure relief valve prevents the beverage chamber being subjected to pressures that may result in damage to the beverage chamber or parts of the freeze cylinder and control system.

The pressure at which the relief valve opens may be set sufficiently above the upper pressure limit for controlling the cooling system so as to open only in an emergency. In this way, the pressure in the beverage chamber can exceed the upper pressure limit without opening the relief valve and thereby reduce beverage loss through the relief valve.

Preferably, the freeze cylinder is provided with an accumulator (expansion chamber) that accommodates expansion of the frozen beverage. In this way, pressure changes in the beverage chamber may be damped to reduce the response of the apparatus to pressure changes.

In an arrangement according to the invention, the control means is operable to control the cooling means in response to the beverage temperature. For example, alcoholic beverages containing water such as cider, beer, lager start to freeze under pressure at temperatures below 0°C, accompanied by an increase in temperature as freezing continues that is used to control the cooling means. Operating the cooling means in response to the temperature change when the beverage freezes, controls the cooling in an accurate, reliable manner that keeps cooling to that required to achieve and maintain the desired viscosity (consistency) of the frozen beverage. As a result, operating costs may be reduced and/or product quality improved. In particular, the "Ostwald" ripening effect may be controlled to prevent the ice crystal structure growing to form large, sharp crystals that inhibit flow of the frozen beverage.

Any suitable temperature sensor such as a thermistor may be employed to monitor the temperature in the beverage chamber and provide a signal representative of the temperature to the control means for controlling operation of the cooling means. A single temperature sensor may be used to monitor the temperature in the beverage chamber. Alternatively a plurality of temperature sensors may be used to monitor the temperature at different positions and provide a signal representative of the average temperature sensed by all the temperature sensors.

Any suitable cooling means may be employed to freeze beverage in the beverage chamber. In one arrangement, the beverage chamber is surrounded by a cooling jacket through which coolant is circulated to freeze the beverage in response to the pressure and/or temperature in the beverage chamber. The coolant may be a water/glycol mixture.
Alternatively, the coolant may be a refrigerant where the cooling jacket comprises an evaporator of a refrigeration system.

Preferably, the beverage chamber is connectable to a dispense tap for dispensing frozen beverage. The tap may also be connectable to a source of liquid (unfrozen) beverage for dispense of beverages comprising either frozen beverage or liquid (unfrozen) beverage only or a mixture of frozen beverage and liquid (unfrozen) beverage. The frozen beverage and liquid (unfrozen) beverage may be the same or different.

According to a second aspect of the present invention, there is provided a method of producing a frozen beverage as defined in claim 7.

Preferably, the method includes operating the cooling means to circulate coolant for freezing beverage in the beverage chamber.

Preferably, the method includes a de-frost cycle for converting frozen beverage to liquid (unfrozen) beverage. The de-frost cycle may be carried out during periods of low use and/or overnight to prevent or reduce the occurrence of ice lumping/compaction and/or Ostwald ripening in the beverage chamber.

Preferably, the method includes a start-up cycle for converting liquid (unfrozen) beverage to frozen beverage

Preferably, the method includes controlling the cooling means during the de-frost cycle in response to the temperature of liquid (unfrozen) beverage in the beverage chamber so as to maintain the beverage at a pre-determined temperature, for example a few degrees above freezing. In this way, deterioration of the beverage is prevented or reduced and the time required to re-freeze the beverage on start-up is reduced.

Preferably, the method includes dispensing frozen beverage from the beverage chamber and replacing beverage drawn off from the beverage chamber with liquid (unfrozen) beverage.

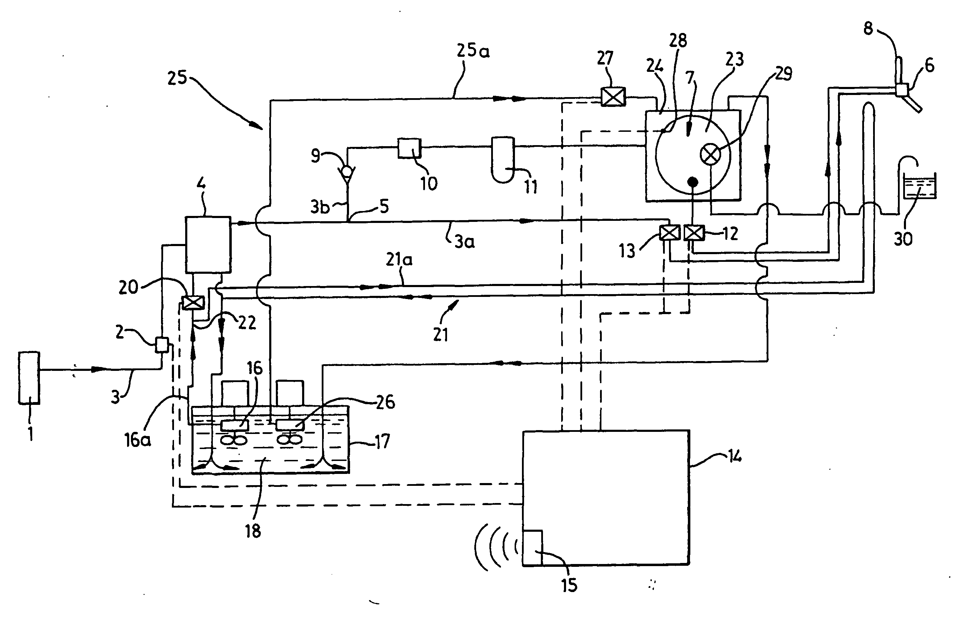

The invention will now be described in more detail by way of example only with reference to the accompanying drawing wherein the single Figure is a schematic illustration of a beverage dispense system embodying the invention in which beverage lines are indicated by single headed arrows and coolant lines by double headed arrows.

The beverage dispense system shown in the drawing has a fob detector 1 and flow sensor 2 in the beverage line 3 from a beverage source (not shown) to one side of a plate heat exchanger 4. In this embodiment, the beverage is cider and the beverage source is a keg. It will be understood, however, that the invention includes other alcoholic and non-alcoholic beverages which may contain dissolved gas such as carbon dioxide or nitrogen referred to herein for convenience as carbonated beverages or uncarbonated (still) beverages.

The beverage line 3 from the plate heat exchanger 4 splits into two lines 3a,3b at a tee 5. One line 3a passes to a manually operable dispense tap 6 for dispense of liquid (unfrozen) cider. The other line 3b passes to a freeze cylinder 7 for converting liquid cider to frozen cider. The beverage line 3b from the freeze cylinder 7 passes to the dispense tap 6 for dispense of frozen cider.

The dispense tap 6 has a handle 8 that is pivotal from an upright, closed position to either one of two open positions. In one open position, the tap dispenses liquid (unfrozen) cider and in the other open position, the tap dispenses frozen cider. This type of dispense tap forms the subject matter of our co-pending European patent application No.1669322. It will be understood that any other suitable type of dispense tap may be employed.

As will be understood, the dispense tap 6 can be operated to dispense cider in either form into a vessel such as a glass (not shown) placed under the tap 6. This allows the glass to be filled either with cider in one form only or with a mixture of both forms. Where a mixture is dispensed the frozen cider typically floats on the surface of the liquid (unfrozen) cider.

The beverage line 3b to the freeze cylinder 7 is provided with a check valve 9, a pressure regulator 10, and an accumulator 11. The check valve 9 prevents backflow of frozen cider into the line 3a. The pressure regulator 10 reduces the pressure of liquid (unfrozen) cider delivered to the freeze cylinder 7 to approximately 2.07 bar (30 psi). The accumulator 11 accommodates expansion of frozen cider in the freeze cylinder 7.

The beverage line 3b from the freeze cylinder 7 to the dispense tap 6 is provided with a solenoid valve 12 and a solenoid valve 13 is also provided in the beverage line 3a downstream of the tee 5. Both solenoid valves 12,13 are connected to a control box 14 and are normally held open to allow dispense of liquid (unfrozen) cider or frozen cider when the dispense tap 6 is opened.

The fob detector 1 detects when the keg needs to be replaced and generates a wireless radio signal that is transmitted to a transceiver 15 at the control box 14 to close the solenoid valves 12,13 so that the beverage lines 3,3a,3b between the fob detector 1 and the solenoid valves 12,13 remain filled with cider while the keg is being changed.

As a result, gas used to propel the cider from the keg through the beverage lines 3,3a,3b is prevented from entering the beverage lines 3,3a,3b and the cider remaining in the lines 3,3a,3b does not de-gas to cause fobbing. In this way, the beverage lines 3,3a,3b and freeze cylinder 7 are filled with cider while the keg is changed and the system is ready to dispense cider after changing the keg without re-priming to remove gas/fob from the beverage lines which is wasteful of cider. This type of beverage saver system forms the subject matter of our co-pending UK Patent Application No.2404651.

The other side of the plate heat exchanger 4 is connected to a re-circulation loop 16 for circulating coolant from a cooler 17 to reduce the temperature of the cider flowing through the heat exchanger 4 during dispense. In this embodiment, the coolant is a glycol/water mixture at a temperature of approximately -7.5°C but it will be understood that the invention is not limited thereto and that other coolants and/or coolant temperatures may be employed according to the system requirements.

The coolant is circulated through the loop 16 from a reservoir 18 by means of a combined pump and agitator 19 located in the reservoir 18. The coolant line 1.6a to the plate heat exchanger 4 includes a solenoid valve 20 connected to the control box 14. The flow sensor 2 in the beverage line 3 is also connected to the control box 14.

The flow sensor 2 detects flow of cider in the beverage line 3 when the dispense tap 6 is opened causing the solenoid valve 20 to open and allow full flow of coolant through the heat exchanger 4 to cool the cider to a desired temperature for delivery to either the dispense tap 6 via line 3a or the freeze cylinder 7 via line 3b according to the form of the cider being dispensed.

The flow sensor 2 detects when the dispense is completed causing the solenoid valve 20 to close and prevent full flow of coolant through the heat exchanger 4 that could result in freezing of the cider remaining in the heat exchanger 4 between dispenses. The control box 14 includes a timer circuit that is operable to open periodically the solenoid valve 20 for a short period of time, for example a few seconds, to provide a flow of coolant through the heat exchanger 4 to prevent the cider remaining in the heat exchanger 4 warming up to any appreciable extent between dispenses.

A branch line 21a is connected to the coolant line 16a at a tee 22 upstream of the solenoid valve 20 and the heat exchanger 4 to provide flow of coolant through a branch loop 21. The branch loop 21 is arranged to provide cooling for the beverage lines 3a,3b to the dispense tap 6 to maintain the desired temperature of the cider in these lines during and between dispenses. The branch loop 21 may also provide cooling of a counter top fitting such as a font (not shown) for the dispense tap 6 to produce condensation or ice on the outside of the fitting. The branch loop 21 comprises a capillary tube of small diameter that provides a restricted flow of coolant sufficient to provide the required cooling without freezing beverage in the beverage lines 3,3a.

The freeze cylinder 7 has a sealed pressure chamber 23 also referred to herein as a beverage chamber that contains the cider and is surrounded by a cooling jacket 24 connected to a re-circulation loop 25 for circulating coolant from the cooler 17 to reduce the temperature of the cider in the chamber 23 sufficiently to convert the liquid (unfrozen) cider to frozen cider in the chamber 23. A beater (not shown) is mounted for rotation in the chamber 23 and has arms for agitating/stirring the cider in the chamber 23 and blades for scraping frozen cider from the inner surface of the chamber 23. The beater is rotated by a motor (not shown) and may be operated continuously while the apparatus is in use.

The coolant is circulated through the loop 25 from the reservoir 18 by means of a combined pump and agitator 26 located in the reservoir 18. The coolant line 25a to the cooling jacket 24 includes a solenoid valve 27 connected to the control box 14. The freeze cylinder 7 is provided with a sensor 28 for monitoring a parameter of the cider that can be used to detect the change in state between unfrozen (liquid) and frozen cider. The sensor 28 is also connected to the control box 14.

In one embodiment not according to the invention, the sensor 28 is a pressure sensor, for example a pressure transducer, for monitoring the pressure of the cider in the chamber 23. In a modification (not shown) the pressure sensor may be located in the beverage line 3b downstream of the non-return valve 9, for example between the accumulator 11 and the beverage chamber 23. In an embodiment not according to the invention, the sensor 28 is a temperature sensor, for example a thermistor, for monitoring the temperature of the cider in the chamber 23.

Operation of the freeze cylinder 7 when the sensor 28 is a pressure sensor will now be described.

Cider in the chamber 23 is cooled by coolant circulating through the cooling jacket 24 when the solenoid valve 27 is open causing liquid (unfrozen) cider to be converted to frozen cider resulting in an increase in volume and hence an increase in pressure within the chamber 23. We have found that the increase in pressure is related to the viscosity (consistency) of the frozen cider produced in the chamber 23 and this is used to control the cooling process to achieve and maintain a desired viscosity (consistency) of frozen cider in the chamber 23.

The pressure changes rapidly according to the viscosity (consistency) of the frozen cider and we have found that this can be used to provide close control of the cooling process to achieve and maintain the desired viscosity (consistency) of the frozen cider in the chamber 23.

More specifically, circulation of coolant through the cooling jacket 24 to cool cider in the chamber 23 is allowed until the pressure reaches a pre-determined upper limit at which the solenoid valve 27 is closed and the solenoid valve 27 remains closed until the pressure falls to a pre-determined lower limit at which the solenoid valve 27 is opened.

We have found that we can achieve and maintain the desired viscosity (consistency) of frozen cider during operation of the freeze cylinder 7 by controlling cooling between an upper limit of 2.62 bar (38 psi) and a lower limit of 2.48 bar (36 psi). It will be understood, however, that the invention is not limited to these pressures and that the upper and lower limits may be altered according to the type of beverage to be dispensed and/or the desired viscosity of the beverage to be dispensed.

During periods of low use and/or overnight, a stand-by or de-frost cycle is activated that allows the frozen beverage to warm-up sufficiently to convert frozen beverage to liquid (unfrozen) beverage. This inhibits the occurrence of ice lumping/compaction and/or Ostwald ripening in the chamber 23. During the de-frost cycle, coolant is circulated through the cooling jacket 24 in response to the temperature of the beverage in the chamber 23 to maintain the beverage temperature a few degrees above freezing. In this way, the time required to re-freeze the beverage is reduced allowing the apparatus to recover quickly to produce frozen beverage for dispense.

On start-up or after a defrost cycle, the chamber 23 contains liquid (unfrozen) cider under pressure that fills the chamber 23 leaving no headspace of gas above the cider in the chamber 23. As a result, the change of state from liquid to frozen cider that occurs when the beverage starts to freeze can result in a sudden increase in pressure within the chamber 23 causing the upper pressure limit to be reached and the solenoid valve 27 closed to stop cooling before a uniform desired viscosity (consistency) of frozen cider is achieved within the chamber 23. Accordingly, the control box includes an over-ride circuit that allows the pressure in the chamber 23 to overshoot the upper pressure limit to achieve the desired viscosity (consistency) and then re-instate the upper pressure limit to control cooling between the upper and lower limits.

The chamber 23 is provided with a pressure relief valve 29 that opens in response to the pressure in the chamber 23 exceeding a pre-determined pressure higher than the upper pressure limit and discharges frozen cider to a drip tray 30 under the dispense tap 6 to reduce the pressure in the chamber 23. The pressure at which the relief valve 29 opens may be set sufficiently above the upper pressure limit for controlling beverage cooling so as to open only in an emergency. In this way, the pressure in the chamber 23 can exceed the upper pressure limit without opening the relief valve 29 and thereby reduce beverage loss through the relief valve 29.

Operation of the freeze cylinder 7 will now be described starting from the condition in which the chamber 23 contains frozen cider of the desired viscosity (consistency) and the solenoid valve 27 is closed. If the tap 6 is opened to dispense frozen cider, the pressure in the chamber 23 drops to the pressure in line 3b, typically about 18 psi, and frozen cider exiting the chamber 23 is replaced by liquid (unfrozen) cider.

The drop in pressure causes the solenoid valve 27 to open to circulate coolant through the jacket 24 while the liquid (unfrozen) cider is converted to frozen cider causing the pressure in the chamber 23 to rise until the upper limit of 38 psi is reached at which the frozen cider in the chamber 23 has the desired viscosity (consistency) and the solenoid valve 27 is closed. In this way, the cooling system responds to start cooling when frozen cider is dispensed and replaced by liquid (unfrozen) cider. As a result, the liquid (unfrozen) cider is converted to frozen cider having the desired viscosity (consistency).

Between dispenses, the pressure in the freeze cylinder 7 may gradually decay as frozen cider starts to melt until the pressure reaches the lower limit of 2.48 bar (36 psi) at which the solenoid valve 27 is opened to circulate coolant through the jacket 24 until the pressure increases to the upper limit of 2.62 bar (38 psi) and the solenoid valve 27 is closed. In this way, the desired viscosity (consistency) of the frozen cider can be maintained between dispenses by simple control of the cooling system in response to the pressure in the chamber 23.

Operation of the freeze cylinder 7 when the sensor 28 is a temperature sensor will now be described. On start-up or following de-frost, the chamber 23 contains liquid (unfrozen) cider having a temperature above 0°C. The control unit 14 opens solenoid valve 27 and coolant is circulated through the cooling jacket 24 to cool the cider to about minus 6°C at which point the cider starts to freeze. The phase change as the cider starts to freeze is accompanied by an increase in temperature of the frozen cider to about minus 3°C.

The temperature change is detected by the temperature sensor 28 and the control unit 14 is operable to control circulation of coolant through the cooling jacket 24 to maintain the temperature of the frozen beverage at this level. If the temperature increases, for example if unfrozen (liquid) cider is added to the chamber 23 to replace frozen cider dispensed from tap 6, the control unit 14 opens solenoid valve 27 to circulate coolant through the cooling jacket 24 to freeze the cider.

We have found that the increase in temperature when the cider starts to freeze under pressure is related to the viscosity (consistency) of the frozen cider produced in the chamber 23 and this is used to control the cooling process to achieve and maintain a desired viscosity (consistency) of frozen cider in the chamber 23. In this embodiment, we have found that we can achieve and maintain the desired viscosity (consistency) of frozen cider during operation of the freeze cylinder 7 by controlling cooling at about minus 3°C. It will be understood, however, that the invention is not limited thereto and that the temperature may be altered according to the type of beverage to be dispensed and/or the desired viscosity of the beverage to be dispensed

As will now be understood, monitoring the pressure or temperature in the chamber 23 to control the cooling applied to the chamber 23 is simple and provides greater control of the cooling. In particular, cooling in excess of that required is reduced or eliminated which inhibits growth of the ice crystal structure. As a result, the "Ostwald" ripening effect and ice compacting/lumping is reduced. In this way, the invention enables the viscosity (consistency) of the frozen cider to be controlled more accurately leading to improved product quality.

It will be appreciated that the invention is not limited to the embodiment above-described and includes all improvements and modifications that can be made within the scope of the claims. For example we may monitor both pressure and temperature of the beverage in the chamber to control operation of the cooling means.

Although the invention has been described for the production of frozen cider, it will be understood that temperature control of the freeze cylinder may be used to produce other types of alcoholic frozen beverages such as beer, lager, cocktails as well as non-alcoholic frozen beverages such as colas, fruit juices and the invention includes any type of beverage capable of being frozen for dispense.

## Claims

1. Apparatus for producing a frozen beverage comprising a freeze cylinder (7) having a beverage chamber (23), cooling means (24) for cooling beverage in the beverage chamber (23) to produce a frozen beverage, monitoring means (28) for monitoring a parameter of the beverage in the beverage chamber (23), and control means (14) for controlling operation of the cooling means (24) in response to the monitoring means (28) **characterised in that** the monitoring means (28) is operable to monitor the temperature of the beverage in the beverage chamber (23) and the control means (14) is operable in response to an increase in temperature that occurs due to the phase change as the beverage starts to freeze to control the cooling means (24).

2. Apparatus according to claim **characterised in that** the monitoring means is a temperature sensor (28) arranged to monitor the temperature in the beverage chamber (23) and provide a signal representative of the temperature to the control means (14) for controlling operation of the cooling means (24).

3. Apparatus according to claim 2 **characterised in that**, a plurality of sensors (28) is used to monitor the temperature in the beverage chamber (23) at different positions and provide a signal representative of the average temperature sensed by all the sensors (28).

4. Apparatus according to any preceding claim **characterised in that**, the freeze cylinder (7) is provided with an accumulator (11) expansion chamber i.e. an that accommodates expansion of the frozen beverage.

5. Apparatus according to any preceding claim **characterised in that**, the beverage chamber (23) is connectable to a dispense tap (6) for dispensing frozen beverage and/or liquid (unfrozen) beverage.

6. Apparatus according to any preceding claim **characterised in that** the beverage chamber (23) is sealed.

7. A method of producing a frozen beverage comprising providing a freeze cylinder (7) having a beverage chamber (23) and cooling means (24) for freezing beverage in the beverage chamber (23), and controlling operation of the cooling means (24) in response to a parameter of the beverage in the beverage chamber (23) **characterised in that** the parameter is temperature of beverage in the beverage chamber(23) and control means(14) is provided for controlling the cooling means(24) in response to an increase in temperature of the beverage that occurs due to the phase change as the beverage starts to freeze.

8. A method according to claim 7 **characterised by** including a start-up cycle for converting liquid unfrozen beverage to frozen beverage and a de-frost cycle for converting frozen beverage to liquid unfrozen beverage.

9. A method according to claim 8 **characterised by** including the step of controlling the cooling means (24) during the de-frost cycle in response to the temperature of liquid (unfrozen) beverage in the beverage chamber (23) so as to maintain the beverage at a pre-determined temperature, for example a few degrees above freezing.

10. A method according to any one of claims 7 to 9 including the step of freezing the beverage under pressure.

11. A method according to any one of claims 1 to 10 in which the beverage is selected from beer, lager and cicles.

## Patentansprüche

1. Vorrichtung zur Erzeugung eines gefrorenen Getränks, umfassend einen Tiefkühlzylinder (7) mit einer Getränkekammer (23), Kühleinrichtungen (24) zum Kühlen des Getränks in der Getränkekammer (23) zur Erzeugung eines gefrorenen Getränks, eine Überwachungseinrichtung (28) zur Überwachung eines Parameters des Getränks in der Getränkekammer (23) und eine Steuereinrichtung (14) zum Steuern des Betriebs der Kühleinrichtung (24) in Abhängigkeit von der Überwachungseinrichtung (28), **dadurch gekennzeichnet, dass** die Überwachungseinrichtung (28) betätigbar ist, um die Temperatur des Getränks in der Getränkekammer (23) zu überwachen, und dass die Steuereinrichtung (1mmer (23) zu überwachen, und dass die Steuereinrichtung (14) in Abhängigkeit von einer Erhöhung der Temperatur, welche wegen der Phasenänderung auftritt, betätigbar ist, wenn das Getränk beginnt zu frieren, um **dadurch** die Kühleinrichtung (24) zu steuern.

2. Vorrichtung nach Anspruch 1, **dadurch gekennzeichnet, dass** die Überwachungseinrichtung ein Temperatursensor (28) ist, welcher angeordnet ist, die Temperatur in der Getränkekammer (23) zu überwachen und ein die Temperatur darstellendes Signal zur Steuereinrichtung (14) zu liefern, um den Betrieb der Kühleinrichtung (24) zu steuern.

3. Vorrichtung nach Anspruch 2, **dadurch gekennzeichnet, dass** eine Vielzahl von Sensoren (28) verwendet wird, um die Temperatur in der Getränkekammer (23) an verschiedenen Orten zu überwachen und um ein Signal zu erzeugen, welches die durch sämtliche Sensoren (28) erfasste Durchschnittstemperatur darstellt.

4. Vorrichtung nach einem der vorstehenden Ansprüche, **dadurch gekennzeichnet, dass** der Tiefkühlzylinder (7) mit einem Akkumulator (11), Expansionskammer, versehen ist, welcher die Ausdehnung des gefrorenen Getränks aufnimmt.

5. Vorrichtung nach einem der vorstehenden Ansprüche, **dadurch gekennzeichnet, dass** die Getränkekammer (23) an einen Ausgabehahn (6) anschließbar ist, um gefrorenes Getränk und/oder flüssiges (nicht gefrorenes) Getränk auszugeben.

6. Vorrichtung nach einem der vorstehenden Ansprüche, **dadurch gekennzeichnet, dass** die Getränkekammer (23) abgedichtet ist.

7. Verfahren zum Erzeugen eines gefrorenen Getränks, umfassend die Bereitstellung eines Tiefkühlzylinders (7) mit einer Getränkekammer (23) und einer Kühleinrichtung (24) zum Frieren des Getränks in der Getränkekammer (23) und Steuern des Betriebs der Kühleinrichtung (24) in Abhängigkeit von einem Parameter des Getränks in der Getränkekammer (23), **dadurch gekennzeichnet, dass** der Parameter die Temperatur des Getränks in der Getränkekammer (23) ist, und dass eine Steuereinrichtung (14) vorgesehen ist, um die Kühleinrichtung (24) in Abhängigkeit von einem Temperaturanstieg des Getränks zu steuern, welcher wegen der Phasenänderung auftritt, wenn das Getränk beginnt zu frieren.

8. Verfahren nach Anspruch 7, **gekennzeichnet durch** das Einschließen eines Start-Zyklus zum Umwandeln von flüssigem, nicht gefrorenem Getränk und eines Auftau-Zyklus zum Umwandeln von gefrorenem in flüssiges, nicht gefrorenes Getränk.

9. Verfahren nach Anspruch 8, **gekennzeichnet durch** Einschließen des Schrittes der Steuerung der Kühleinrichtung (24) während des Entfrostungszyklus in Abhängigkeit von der Temperatur von flüssigem (nicht gefrorenem) Getränk in der Getränkekammer (23), um **dadurch** das Getränk bei einer vorbestimmten Temperatur, beispielsweise wenige Grad oberhalb des Gefrierpunktes, zu halten.

10. Verfahren nach einem der Ansprüche 7 bis 9, einschließend den Schritt des Frierens des Getränks unter Druck.

11. Verfahren nach einem der Ansprüche 7 bis 10, bei welchem das Getränk aus der aus Bier, Lager und Cidre bestehenden Gruppe gewählt wird.

## Revendications

1. Appareil pour produire une boisson glacée comprenant un cylindre de congélation (7) ayant une chambre de boisson (23), un moyen de refroidissement (24) pour refroidir la boisson dans la chambre de boisson (23) pour produire une boisson congelée, un moyen de surveillance (28) pour surveiller un paramètre de la boisson dans la chambre de boisson (23), et un moyen de commande (14) pour commander l'opération du moyen de refroidissement (24) en réponse au moyen de surveillance (28), **caractérisé en ce que** le moyen de surveillance (28) est actionnable pour surveiller la température de la boisson dans la chambre de boisson (23), et le moyen de commande (14) est actionnable en réponse à une augmentation de la température qui se produit à cause du changement de phase lorsque la boisson commence à congeler pour commander le moyen de refroidissement (24).

2. Appareil selon la revendication 1, **caractérisé en ce que** le moyen de surveillance est un capteur de température (28) agencé pour surveiller la température dans la chambre de boisson (23) et pour fournir un signal représentatif de la température au moyen de commande (14) pour commander le fonctionnement du moyen de refroidissement (24).

3. Appareil selon la revendication 2, **caractérisé en ce qu'**une pluralité de capteurs (28) est utilisée pour surveiller la température dans la chambre de boisson (23) à des position différentes et pour fournir un signal représentatif de la température moyenne détectée par tous les capteurs (28).

4. Appareil selon l'une quelconque des revendications précédentes, **caractérisé en ce que** le cylindre de congélation (7) est muni d'un accumulateur (11), c'est-à-dire une chambre d'expansion, qui reçoit l'expansion de la boisson congelée.

5. Appareil selon l'une quelconque des revendications précédentes, **caractérisé en ce que** la chambre de boisson (23) peut être connectée à un robinet de distribution (6) pour distribuer la boisson congelée et/ou la boisson liquide (décongelée).

6. Appareil selon l'une quelconque des revendications précédentes, **caractérisé en ce que** la chambre de boisson (23) est scellée.

7. Procédé de production d'une boisson congelée comprenant la réalisation d'un cylindre de congélation (7) ayant une chambre de boisson (23) et un moyen de refroidissement (24) pour la congélation de la boisson dans la chambre de boisson (23), et la commande du fonctionnement du moyen de refroidissement (24) en réponse à un paramètre de la boisson dans la chambre de boisson (23), **caractérisé en ce que** le paramètre est la température de la boisson dans la chambre de boisson (23), et le moyen de commande (14) est prévu pour commander le moyen de refroidissement (24) en réponse à une augmentation de la température de la boisson qui se produit à cause du changement de phase lorsque la boisson commence à congeler.

8. Procédé selon la revendication 7, **caractérisé en ce qu'**il inclut un cycle de démarrage pour convertir la boisson liquide non congelée en boisson congelée ainsi qu'un cycle de décongélation pour convertir la boisson congelée en boisson liquide non congelée.

9. Procédé selon la revendication 8, **caractérisé en** incluant l'étape consistant à commander le moyen de refroidissement (24) durant le cycle de décongélation en réponse à la température de la boisson liquide (non congelée) dans la chambre de boisson (23) de manière à maintenir la boisson à une température prédéterminée, par exemple à quelques degrés au-dessus du point de congélation.

10. Procédé selon l'une quelconque des revendications 7 à 9, incluant l'étape consistant à congeler la boisson sous pression.

11. Procédé selon l'une quelconque des revendications 7 à 10, dans lequel la boisson est sélectionnée parmi la bière, le lager et le cidre.
